# EUROPEAN PATENT SPECIFICATION

(11) **EP 2 247 202 B1**
(45) Date of publication and mention of the grant of the patent: **19.03.2014**
(21) Application number: 08864689.8
(22) Date of filing: 22.12.2008
(51) Int. Cl.: A23C 19/09, A23J 3/30, A23J 3/34, A23K 1/16, A23L 1/305, A23C 9/13

(54) **PRE-FIBRIL COMPOSITION AND FIBRILS FROM PROTEINACEOUS MATERIALS**
PRÄFIBRILLÄRE ZUSAMMENSETZUNG UND FIBRILLEN AUS PROTEINHALTIGEM MATERIAL
COMPOSITION PRE-FIBRILLAIRE ET FIBRILLES À PARTIR DE MATÉRIAUX PROTÉIQUES

(30) Priority: 21.12.2007 NL 2001123; 15.05.2008 EP 08156298
(43) Date of publication of application: 10.11.2010
(73) Proprietor: Friesland Brands B.V., 3818 LE Amersfoort (NL)
(72) Inventor: AKKERMANS, Cynthia, NL-3825 EH Amersfoort (NL); SCHOKKER, Erik Peter, NL-6721 BJ Bennekom (NL); PAQUES, Marcel, 8161 AS Epe (NL); NIEUWENHUIJSE, Johannes Andries, NL-7207 NA Zutphen (NL); ZIJTVELD-VAN DER WIEL, Johanna Henriëtte, NL-3743 BP Baarn (NL); VENEMA, Paul, NL-6701 EC Wageningen (NL); VAN DER GROOT, Atze Jan, NL-6717 TR Ede (NL)
(74) Representative: Hatzmann, Martin
(86) International application number: PCT/NL2008/050845
(87) International publication number: WO 2009/082229

(56) References cited:
- WO-A-2004/049819
- WO-A-2008/088472
- JP-A- 8 070 866
- CYNTHIA AKKERMANS ET AL: "Shear Pulses Nucleate Fibril Aggregation" FOOD BIOPHYSICS, KLUWER ACADEMIC PUBLISHERS-PLENUM PUBLISHERS, NE, vol. 1, no. 3, 23 May 2006 (2006-05-23), pages 144-150, XP019413858 ISSN: 1557-1866 cited in the application
- AKKERMANS CYNTHIA ET AL: "Peptides are building blocks of heat-induced fibrillar protein aggregates of beta-lactoglobulin formed at pH 2" BIOMACROMOLECULES, vol. 9, no. 5, 17 April 2008 (2008-04-17), pages 1474-1479, XP002504412 ISSN: 1525-7797
- AKKERMANS C ET AL: "Micrometer-sized fibrillar protein aggregates from soy glycinin and soy protein isolate." JOURNAL OF AGRICULTURAL AND FOOD CHEMISTRY, vol. 55, no. 24, 30 October 2007 (2007-10-30), pages 9877-9882, XP002504413
- LINDEN E VAN DER ET AL: "Self-assembly and aggregation of proteins." CURRENT OPINION IN COLLOID AND INTERFACE SCIENCE, vol. 12, no. 4-5, 6 August 2007 (2007-08-06), pages 158-165, XP002504414
- MADSEN J S ET AL: "Hydrolysis of milk protein by a Bacillus licheniformis protease specific for acidic amino acid residues" JOURNAL OF FOOD SCIENCE, vol. 62, no. 3, 1997, pages 579-582, XP002504751 ISSN: 0022-1147
- HAZEBROUCK STÉPHANE ET AL: "Efficient production and secretion of bovine [beta]-lactoglobulin by Lactobacillus casei" MICROBIAL CELL FACTORIES, BIOMED CENTRAL, LONDON, NL, vol. 6, no. 1, 6 April 2007 (2007-04-06), XP021024079 ISSN: 1475-2859

## Description

The invention pertains to the making of fibrils from proteinaceous materials such as obtained from whey protein. In particular, the invention pertains to the making of fibrils from proteinaceous material obtained from a β-lactoglobulin, glycinin or patatin

As described in WO 2004/049819, β-lactoglobulin can be subjected to a process resulting in fibrils. The process comprises dissolving the β-lactoglobulin in aqueous hydrochloric acid, repeatedly diluting and filtering the protein solution, and subjecting the resulting solution to elevated temperature (e.g. 80°C) for an extended period of time (e.g. 10 hours). As described in WO 2004/049819, this process results in the protein being aggregated into fibrils. These fibrils can be used as an additive in a wide range of food and non-food products, wherein the fibrils can have varying different functions, such as foam stabilisation, enhancing of water-binding and/or texture in meat or meat-like products, general texturizing properties including viscosity improvement, gelling ability enhancement. In general, the fibrils have improved functional properties comprising thickening capability, gelling capability, foaming capability, and emulsifying capability. These improvements are described with reference to the same protein in the same concentration, but not subjected to the aforementioned process.

It will be apparent that for not all of the improved functional properties of the proteinaceous fibrils of WO 2004/049819, a fibrillar texture is desired *per se.* Further, in the manufacture of many of these products it will not be desired for the manufacturer, or the person combining ingredients into products, to conduct the above-described process before putting the additive into a product. In many such cases, a ready-to-use additive, available e.g. as a dry powder, were preferred over the *in situ* preparation of proteinaceous fibrils from proteins using the aforementioned process.

It would be desired, without detracting from the functional possibilities provided by the fibrils themselves, to make available similar functionalities in a process that does not require heating for an extended period of time. It would also be desired to provide an intermediate product that can be stored and shipped e.g. as a powder, and that is capable of being transformed into fibrils at a chosen point in time. A further desire in this respect is to provide an ingredient that can be rendered into powder from a relatively low viscous solution. It would further be desired to provide a process in which the two aspects of the afore-described fibrils, viz. functional properties and fibrillar nature, can be realized in separate process steps, or at least in separate parts of a process. By preference it would be desired if thus, by selecting conditions, the ultimate composition and functionality of the proteinaceous composition and the fibrils formed there from could be tailored. With the aim to meet one or more of these objectives, the invention, in one aspect, provides a method of making a peptide pre-fibril composition, by the hydrolysis of a protein selected from the group consisting of β-lactoglobulin-containing whey protein preparation, glycinin-containing soy bean protein preparation, patatin, and mixtures thereof, comprising providing a solution of the protein in an aqueous acidic solvent, heating the solution under fibril-inhibiting conditions, and terminating the hydrolysis conditions by increasing the pH to neutral. Therein the hydrolysis is conducted under acidic conditions at elevated temperature, and is terminated when the hydrolysis has occurred in a sufficient manner so as to form the peptide building blocks for the fibrils, but not yet the fibrils themselves. This typically refers to making a peptide pre-fibril composition by the hydrolysis of a protein selected from the group consisting of β-lactoglobulin-containing whey protein preparation, glycinin-containing soy bean protein preparation, patatin, and mixtures thereof, wherein the hydrolysis is conducted at pH 0.5-4 at a temperature higher than 20°C, and wherein the pH is increased to neutral after at most 5 hours.

The peptide pre-fibril compositions made by the invention, have a variety of uses, including uses in which the pre-fibril composition is turned into fibrils in an end-product - that can then be used as described in WO 2004/049819, and uses in which the pre-fibril composition *per se* is contained in end product, e.g. with the aim of forming fibrils (fibrillary aggregation) upon use or consumption of the end-product. The pre-fibril composition made by the invention can be used in a diet food for human or animal body weight control.

As to the conditions mentioned, the elevated temperature generally means a temperature above 20°C, preferably of from 35 °C to 140 °C, and more preferably of from 80 °C to 120 °C. The acidic conditions can refer to any acid pH, but preferably a relatively strongly acidic pH, of from 0.5 to 4, more preferably of from 0.5 to 3, and most preferably of from 1 to 2. A higher temperature, above 80°C and more preferably above 100°C, is particularly preferred in view of the possibility to separate hydrolysis from fibril formation, as a higher temperature will lead to an increased rate of hydrolysis.

A further reference on protein fibrils obtained by the low pH hydrolysis of β-lactoglobulin is Cynthia Akkermans et al., FOBI (2006) 1:144-150. Herein an experiment is described in which *inter alia* the influence of shear on fibril formation is studied. It is shown that simple shear can accelerate fibril formation. In a reference experiment, initially without shear, the hydrolysis conditions are maintained under a shear flow of 200 s⁻¹ for sufficiently long lag times so as to allow the fibril formation to occur. As in WO 2004/049819, the fibrils are disclosed to be made up of protein aggregates.

Without wishing to be bound by theory, the present inventors believe that, other than suggested in the art, the so-called β-lactoglobulin fibrils, are not in fact made up of intact β-lactoglobulin protein molecules as a building block, but are made of peptide components derived from the β-lactoglobulin. This novel insight into the nature of the aforementioned proteinaceous fibrils opens up the wide range of useful possibilities now proffered by the invention. Similarly, it was found that fibrils of soy bean protein and potato protein are made up of peptides.

Particularly, by virtue of the formation of peptides, an intermediate step can be defined in the aforementioned process, viz. a step in which the hydrolysis has occurred in a sufficient manner so as to form the peptide building blocks for the fibrils, but not yet the fibrils themselves. This is referred to as a "pre-fibril composition."

The pre-fibril composition made by the process of the invention, can be characterized as obtainable in an acid hydrolysis process under conditions allowing peptide formation, or resulting in peptide formation at a relatively high rate, with fibril formation absent or at a relatively low rate. If, e.g. the process as described in WO 2004/049819 is followed, the pre-fibrils are formed if the step in which the protein is allowed to stand in a solution at low pH and high temperature, is terminated at an early point in time. The process time should be sufficiently long to allow hydrolysis in the acid environment to take place. Although within a few minutes some hydrolysis will have taken place, this preferably means a process time of at least 15 minutes, and more preferably at least 30 minutes. The process time should be short enough to avoid too high an extent of stable fibril formation. Although even within 15 minutes fibril formation might occur, these fibrils will not be stable. In fact, for a period of up to 5 hours fibrils will be formed, but these will disintegrate upon increasing pH to neutral. Preferably, the hydrolyzed protein is allowed to stand for a period of time of 2.5 hours or less, more preferably 1.5 hour or less. Most preferably, a period of 30-60 minutes is taken to obtain sufficient peptide formation without undue formation of stable fibrils. Similarly, the temperature can be adapted. It will be apparent to the skilled person that a lower temperature will generally require a longer standing time for adequate hydrolysis, and will generally allow a longer standing time until fibril formation occurs.

Besides tuning time and temperature, pH can also be tuned. A lower pH will lead to a higher rate of hydrolysis, which aids in obtaining a process in which hydrolysis can occur separately from fibril formation.

In addition to, or in lieu of, the aforementioned process of simply allowing the protein to stand under acidic hydrolysis conditions, the object of forming peptides without forming fibrils can be realized with the aid of further measures so as to provide fibril inhibiting conditions (i.e. conditions under which fibril formation is relatively slow, is retarded or is avoided, or conditions under which fibril formation, if occurring, is at least partially reversed). These measures include, but are not limited to, any one or more of the following:
- avoidance of shear forces (e.g. no stirring), with timely increase of pH to neutral;
- a low concentration of protein (preferably below 2 wt.% and more preferably below 1 wt.%;
- the addition of molecules exhibiting a chaotropic effect, i.e. molecules that will tend to counteract the formation of hydrogen bonds and hydrophobic interactions (e.g. urea, guanidine chloride); as a result the peptides will have a lower tendency to interact as close as necessary to allow bonds to form (as hydrogen bridges and hydrophobic interactions are believed to be the initial force for fibril formation);
- the addition of compounds that serve as inhibitors either by breaking a fibril-like conformation, or reversing fibrillogenesis. The first group is called mini-chaperones, also termed β-sheet breakers, which are peptides that bind to the sequence of the protein region responsible for self association. The second group is composed of small molecules, which are found to be able to interrupt fibril formation. Thus, often peptides or proteins are used as β-sheet blockers. Other potential food-grade β-sheet blockers include vitamin A, β-carotene and coenzyme Q10, oleic acid, and cholesterol.

The invention can be realised on the basis of β-lactoglobulin-containing whey protein preparations, i.e. a composition comprising whey protein, with the whey protein comprising β-lactoglobulin. Whey proteins can be described as those milk proteins that remain after curdling of milk, i.e. precipitation of casein, generally upon the addition of rennet to cheese milk. The term "whey protein" is sometimes used to indicate the entire protein composition of whey, but usually indicates any protein or combination of proteins present in whey. The invention pertains to any and all whey protein compositions comprising β-lactoglobulin, which is one of the main whey proteins. Preferably the β-lactoglobulin- containing whey protein preparation is whey protein isolate, comprising a substantial fraction (preferably, based on total proteinaceous material, at least 50% and more preferably at least 80%) of β-lactoglobulin, and most preferably it is β-lactoglobulin itself.

The invention can also be realized on the basis of glycinin (soy bean protein) or patatin (protein originating from members of the *Solanaceae* plant family, such as potato protein).

The pre-fibril composition made by the process of the invention may comprise a wide range of peptide fragments of various molecular weights, generally between 1,000 and 10,000 Da and preferably consists of peptide fragments having molecular weights between 2,000 and 8,000 Da. With respect to whey protein fibrils it is preferred that the pre-fibril composition comprises, as the dominant fragment, i.e. the fragment that of all fragments is present most, defined by amino acids nos. 12 to 32(f₁₂₋₃₃) of from β-lactoglobulin, i.e. IQKVAGTWYSLAMAASDISLL. This fragment can be present, as such, as part of larger fragments, or both. Preferably the following peptides:
- f₁₂₋₃₂: IQKVAGTWYSLAMAASDISLL
- f₁₂₋₃₃: IQKVAGTWYSLAMAASDISLLD
- f₁₁₋₃₂: DIQKVAGTWYSLAMA.ASDISLL
- f₁₁₋₃₃: DIQKVAGTWYSLAMAASDISLLD
- f₁₋₃₂:: LIVTQTMKGLDIQKVAGTWYSLAMAASDISLL
- f₁₋₃₃:: LIVTQTMKGLDIQKVAGTWYSLAMAASDISLLD
- f₁₋₂₇: LIVTQTMKGLDIQKVAGTWYSLAMAAS
- f₁₋₂₈: LIVTQTMKGLDIQKVAGTWYSLAMAASD
- f₁₂₋₆₄: IQKVAGTWYSLAMAASDISLLDAQSAPLRVYVEELKPT PEGDLEILLQKWEND
- f₁₁₋₆₃: DIQKVAGTWYSLAMAASDISLLDAQSAPLRVYVEELKPT PEGDLEILLQKWEN
- f₁₁₋₆₄: DIQKVAGTWYSLAMAASDISLLDAQSAPLRVYVEELKPT PEGDLEILLQKWEND

The fragment is preferably present, as defined hereinbefore, to the extent of more than 40% of all peptides present

The peptide composition preferably further comprises one or more of the following peptides:
- f₁₋₅₂:: LIVTQTMKGLDIQKVAGTWYSLAMAASDISLLDAQSAP LRVYVEELKPTPEG
- f₁₋₅₃:: LIVTQTMKGLDIQKVAGTWYSLAMAASDISLLDAQSAP LRVYVEELKPTPEGD
- f₁₃₈₋₁₆₂: KALKALPMHIRLSFNPTQLEEQCHI
- f₉₉₋₁₂₈: YKKYLLFCMENSAEPEQSLACQCCLVRTPEV
- f₉₉₋₁₂₉: YKKYLLFCMENSAEPEQSLACQCCLVRTPEVD
- f₉₈₋₁₂₈: DYKKYLLFCMENSAEPEQSLACQCCLVRTPEV
- f₉₇₋₁₂₈: TDYKKYLLFCMENSAEPEQSLACQCCLVRTPEV

This typically refers to compositions as obtained by the aforementioned process of acidic hydrolysis. Other preferred characteristics of the prefibril peptide composition so obtained, is that the majority of the peptide fragments result from cleavage of the peptide bonds before or after aspartic acid. The pre-fibril peptide composition is further characterized, preferably, by a comprising the more hydrophobic peptides obtained from hydrolysis of the β-lactoglobulin-containing protein preparation, by a low charge at pH 2, and by the absence of proline.

It is further envisaged to enrich the peptide composition (e.g. by fractionation) in respect of the aforementioned peptides, and preferably in respect of f₁₂₋₃₃.

Similarly, preferred fibril-forming peptide fragments on the basis of glycinin and patatin are based on the following:
Glycinin G1
Accession number: P04776

| | |
|---|---|
| f42-128 | |
| f42-127 | |
| f43-128 | |
| f43-127 | |
| f₁₂₈₋₁₄₀ | DRHQKIYNFREGD |
| f₁₂₈₋₁₃₉ | DRHQKIYNFREG |
| f₁₂₉₋₁₄₀ | RHQKIYNFREGD |
| f₁₂₉₋₁₃₉ | RHQKIYNFREG |
| f₁₄₀₋₁₅₇ | DLIAVPTGVAWWMYNNED |
| f₁₄₀₋₁₅₆ | DLIAVPTGVAWWMYNNE |
| f₁₄₁₋₁₅₇ | LIAVPTGVAWWMYNNED |
| f₁₄₁₋₁₅₆ | LIAVPTGVAWWMYNNE |
| f₁₅₇₋₁₆₇ | DTPWAVSIID |
| f₁₅₇₋₁₆₆ | DTPWAVSII |
| fₗ₅₈₋₁₆₇ | TPVVAVSIID |
| f₁₅₈₋₁₆₆ | TPWAVSII |
| f₁₇₆₋₂₃₆ | |
| f₁₇₆₋₂₃₅ | |
| f₁₇₇₋₂₃₆ | |
| f₁₇₇₋₂₃₅ | |
| f₂₅₁₋₂₇₀ | DKGAIVTVKGGLSVIKPPTD |
| f₂₅₁₋₂₆₉ | DKGAIVTVKGGLSVIKPPT |
| f₂₅₂₋₂₇₀ | KGAIVTVKGGLSVIKPPTD |
| f₂₅₂₋₂₆₉ | KGAIVTVKGGLSVIKPPT |
| f₃₁₃₋₃₃₂ | DETICTMRLRHNIGQTSSPD |
| f₃₁₃₋₃₃₁ | DETICTMRLRHNIGQTSSP |
| f₃₁₄₋₃₃₂ | ETICTMRLRHNIGQTSSPD |
| f₃₁₄₋₃₃₁ | ETICTMRLRHNIGQTSSP |
| f₃₃₂₋₃₄₈ | DIYNPQAGSVTTATSLD |
| f₃₃₂₋₃₄₇ | DIYNPQAGSVTTATSL |
| f₃₃₃₋₃₄₈ | IYNPQAGSVTTATSLD |
| f₃₃₃₋₃₄₇ | IYNPQAGSVTTATSL |
| f₃₄₈₋₄₀₃ | |
| f₃₄₈₋₄₀₂ | |
| f₃₄₉₋₄₀₃ | |
| f₃₄₉₋₄₀₂ | |
| f₄₀₃₋₄₂₇ | DGELQEGRVLIVPQNFWAARSQSD |
| f₄₀₃₋₄₂₆ | DGELQEGRVLIVPQNFWAARSQS |
| f₄₀₄₋₄₂₇ | GELQEGRVLIVPQNFVVAARSQSD |
| f₄₀₄₋₄₂₆ | GELQEGRVLIVPQNFWAARSQS |
| f₄₂₇₋₄₃₈ | DNFEYVSFKTND |
| f₄₂₇₋₄₃₇ | DNFEYVSFKTN |
| f₄₂₈₋₄₃₈ | NFEYVSFKTND |
| f₄₂₈₋₄₃₇ | NFEYVSFKTN |
| f₄₃₈₋₄₉₀ | DTPMIGTLAGANSLLNALPEEVIQHTFNLKSQQARQIKNNNPFKFLV PPQESQ |
| f₄₃₉₋₄₉₀ | TPMIGTLAGANSLLNALPEEVIQHTFNLKSQQARQIKNNNPFKFLVP PQESQ |

Glycinin G5
Accession number: P04347

| | |
|---|---|
| f₄₄₋₁₃₃ | |
| f₄₄₋₁₃₂ | |
| f₄₅₋₁₃₃ | |
| f₄₅₋₁₃₂ | |
| f₁₁₃₋₁₄₅ | DSHQKIRHFNEGD |
| f₁₃₃₋₁₄₄ | DSHQKIRHFNEG |
| f₁₃₄₋₁₄₅ | SHQKIRHFNEGD |
| f₁₃₄₋₁₄₄ | SHQKIRHFNEG |
| f₁₄₅₋₁₆₂ | DVLVIPLGVPYWTYNTGD |
| f₁₄₅₋₁₆₁ | DVLVIPLGVPYWTYNTG |
| f₁₄₆₋₁₆₂ | VLVIPLGVPYWTYNTGD |
| f₁₄₆₋₁₆₁ | VLVIPLGVPYWTYNTG |
| f₁₆₂₋₁₇₂ | DEPWAISPLD |
| f₁₆₂₋₁₇₁ | DEPWAISPL |
| f₁₆₃₋₁₇₂ | EPWAISPLD |
| f₁₆₃₋₁₇₁ | EPWAISPL |
| f₁₈₁₋₁₉₄ | DQNPRVFYLAGNPD |
| f₁₈₁₋₁₉₃ | DQNPRVFYLAGNP |
| f₁₈₂₋₁₉₄ | QNPRVFYLAGNPD |
| f₁₈₂₋₁₉₃ | QNPRVFYLAGNP |
| f₂₅₆₋₂₈₀ | DERKQIVTVEGGLSVISPKWQEQED |
| f₂₅₆₋₂₇₉ | DERKQIVTVEGGLSVISPKWQEQE |
| f₂₅₇₋₂₈₀ | ERKQIVTVEGGLSVISPKWQEQED |
| f₂₅₇₋₂₇₉ | ERKQIVTVEGGLSVISPKWQEQE |
| f₃₄₅₋₃₆₆ | GVEENICTMKLHENIARPSRAD |
| f₃₄₅₋₃₆₅ | GVEENICTMKLHENIARPSRA |
| f₃₆₆₋₄₀₇ | DFYNPKAGRISTLNSLTLPALRQFGLSAQYWLYRNGIYSPD |
| f₃₆₆₋₄₀₆ | DFYNPKAGRISTLNSLTLPALRQFGLSAQYWLYRNGIYSP |
| f₃₆₇₋₄₀₇ | FYNPKAGRISTLNSLTLPALRQFGLSAQYWLYRNGIYSPD |
| f₃₆₇₋₄₀₆ | FYNPKAGRISTLNSLTLPALRQFGLSAQYVVLYRNGIYSP |
| f₄₀₇₋₄₃₆ | DWNLNANSVTMTRGKGRVRVVNCQGNAVFD |
| f₄₀₇₋₄₃₅ | DWNLNANSVTMTRGKGRVRWNCQGNAVF |
| f₄₀₈₋₄₃₆ | WNLNANSVTMTRGKGRVRVVNCQGNAVFD |
| f₄₀₈₋₄₃₅ | WNLNANSVTMTRGKGRVRVVNCQGNAVF |
| f₄₃₆₋₄₈₀ | DGELRRGQLLWPQNPAVAEQGGEQGLEYWFKTHHNAVSSYIKD |
| f₄₃₆₋₄₇₉ | DGELRRGQLLVVPQNPAVAEQGGEQGLEYWFKTHHNAVSSYIK |
| f₄₃₇₋₄₈₀ | GELRRGQLLVVPQNPAVAEQGGEQGLEYVVFKTHHNAVSSYIKD |
| f₄₃₇₋₄₇₉ | GELRRGQLLVVPQNPAVAEQGGEQGLEYWFKTHHNAVSSYIK |
| f₄₈₀₋₅₁₆ | DVFRVIPSEVLSNSYNLGQSQVRQLKYQGNSGPLVNP |
| f ₄₈₁₋₅₁₆ | VFRVIPSEVLSNSYNLGQSQVRQLKYQGNSGPLVNP |

Patatin
Accession number: CAA25592

| | |
|---|---|
| f₂₃₋₃₅ | DTLGEMVTVLSID |
| f₂₃₋₃₄ | DTLGEMVTVLSI |
| f₂₄₋₃₅ | TLGEMVTVLSID |
| f₂₄₋₃₄ | TLGEMVTVLSID |
| f₇₁₋₁₀₁ | DVIGGTSTGGLLTAMITTPNENNRPFAAAKD |
| f₇₁₋₁₀₀ | DVIGGTSTGGLLTAMITTPNENNRPFAAAK |
| f₇₂₋₁₀₁ | VIGGTSTGGLLTAMITTPNENNRPFAAAKD |
| f₇₂₋₁₀₀ | VIGGTSTGGLLTAMITTPNENNRPFAAAK |
| f₁₄₀₋₁₅₆ | DTRVHQALTEVAISSFD |
| f₁₄₀₋₁₅₅ | DTRVHQALTEVAISSF |
| f₁₄₁₋₁₅₆ | TRVHQALTEVAISSFD |
| f₁₄₁₋₁₅₅ | TRVHQALTEVAISSF |
| f₁₅₆₋₁₈₂ | DIKTNKPVIFTKSNLAKSPELDAKMYD |
| f₁₅₆₋₁₈₁ | DIKTNKPVIFTKSNLAKSPELDAKMY |
| f₁₅₇₋₁₈₂ | IKTNKPVIFTKSNLAKSPELDAKMYD |
| f₁₅₇₋₁₈₁ | IKTNKPVIFTKSNLAKSPELDAKMY |
| f₁₈₂₋₂₀₇ | DICYSTAAAPTYFPPHYFVTHTSNGD |
| f₁₈₂₋₂₀₆ | DICYSTAAAPTYFPPHYFVTHTSNG |
| f₁₈₃₋₂₀₇ | ICYSTAAAPTYFPPHYFVTHTSNGD |
| f₁₈₃₋₂₀₆ | ICYSTAAAPTYFPPHYFVTHTSNG |
| f₂₀₇₋₂₁₅ | DKYEFNLVD |
| f₂₀₇₋₂₁₄ | DKYEFNLV |
| f₂₃₋₃₅ | DTLGEMVTVLSID |
| f₂₃₋₃₄ | DTLGEMVTVLSI |
| f₂₄₋₃₅ | TLGEMVTVLSID |
| f₂₄₋₃₄ | TLGEMVTVLSI |
| f₇₁₋₁₀₁ | DVIGGTSTGGLLTAMITTPNENNRPFAAAKD |
| f₇₁₋₁₀₀ | DVIGGTSTGGLLTAMITTPNENNRPFAAAK |
| f₇₂₋₁₀₁ | VIGGTSTGGLLTAMITTPNENNRPFAAAKD |
| f₇₂₋₁₀₀ | VIGGTSTGGLLTAMITTPNENNRPFAAAK |
| f₁₄₀₋₁₅₆ | DTRVHQALTEVAISSFD |
| f₁₄₀₋₁₅₅ | DTRVHQALTEVAISSF |
| f₁₄₁₋₁₅₆ | TRVHQALTEVAISSFD |
| f₁₄₁₋₁₅₅ | TRVHQALTEVAISSF00 |
| f₁₅₆₋₁₈₂ | DIKTNKPVIFTKSNLAKSPELDAKMYD |
| f₁₅₆₋₁₈₁ | DIKTNKPVIFTKSNLAKSPELDAKMY |
| f₁₅₇₋₁₈₂ | IKTNKPVIFTKSNLAKSPELDAKMYD |
| f₁₅₇₋₁₈₁ | IKTNKPVIFTKSNLAKSPELDAKMY |
| f₁₈₂₋₂₀₇ | DICYSTAAAPTYFPPHYFVTHTSNGD |
| f₁₈₂₋₂₀₆ | DICYSTAAAPTYFPPHYFVTHTSNG |
| f₁₈₃₋₂₀₇ | ICYSTAAAPTYFPPHYFVTHTSNGD |
| f₁₈₃₋₂₀₆ | ICYSTAAAPTYFPPHYFVTHTSNG |
| f₂₀₇₋₂₁₅ | DKYEFNLVD |
| f₂₀₇₋₂₁₄ | DKYEFNLV |
| f₂₀₈₋₂₁₅ | KYEFNLVD |
| f₂₀₈₋₂₁₄ | KYEFNLV |
| f₂₃₉₋₂₆₇ | DPKFASIKSLNYKQMLLLSLGTGTNSEFD |
| f₂₃₉₋₂₆₆ | DPKFASIKSLNYKQMLLLSLGTGTNSEF |
| f₂₄₀₋₂₆₇ | PKFASIKSLNYKQMLLLSLGTGTNSEFD |
| f₂₄₀₋₂₆₆ | PKFASIKSLNYKQMLLLSLGTGTNSEF |
| f₃₀₀₋₃₃₃ | DYYLSTVFQARHSQNNYLRVQENALTGTTTEMDD |
| f₃₀₀₋₃₃₂ | DYYLSTVFQARHSQNNYLRVQENALTGTTTEMD |
| f₃₀₀₋₃₃₁ | DYYLSTVFQARHSQNNYLRVQENALTGTTTEM |
| f₃₀₁₋₃₃₃ | YYLSTVFQARHSQNNYLRVQENALTGTTTEMDD |
| f₃₀₁₋₃₃₂ | YYLSTVFQARHSQNNYLRVQENALTGTTTEMD |
| f₃₀₁₋₃₃₁ | YYLSTVFQARHSQNNYLRVQENALTGTTTEM |

In yet another embodiment, the pre-fibril peptide composition can also be formed by peptide synthesis. Preferably the peptides synthesized are relatively hydrophobic and, more preferably are peptides capable of undergoing β-sheet interaction. Peptide synthesis can be executed chemically in known manners, particularly using solid-phase peptide synthesis methods as are well known to the skilled person. Particularly for relatively long peptides, such as a the peptides indicated above, it is preferred to perform the synthesis thereof by means of microbiological methods. Suitable micro-organisms the genome of which encodes for the appropriate peptides, and which thus can be employed to form these peptides, are known to the skilled person. Particularly, microorganisms are to be selected that satisfy the following requirements:
- being food grade microorganisms
- their genome encoding for peptides consisting of 10 to 60 amino acids, and preferably 15 to 25 amino acids;
- the encoded peptides start and/or end with aspartic acid;
- the encoded peptides preferably consist of a (at neutral pH) uncharged amino acids;
- the encoded peptides are capable of folding into a beta-sheet conformation;
Suitable microorganisms include: BACILLUS_WEIHENSTEPHANENSIS, BIFIDOBACTERIUM_ADOLESCENTIS, BIFIDOBACTERIUM_LONGUM, BREVIBACTERIUM_LINENS, LACTOBACILLUS_ACIDOPHILUS, LACTOBACILLUS_BREVIS, LACTOBACILLUS_CASEI, LACTOBACILLUS_DELBRUECKII_SUBSP_BULGARICUS, LACTOBACILLUS_GASSERI, LACTOBACILLUS_JOHNSONII, LACTOBACILLUS_PLANTARUM, LACTOBACILLUS_REUTERI, LACTOBACILLUS_SAKEI, LACTOBACILLUS_SALIVARIUS, LACTOCOCCUS_LACTIS_CREMORIS, LACTOCOCCUS_LACTIS_LACTIS, LEUCONOSTOC_MESENTEROIDES, OENOCOCCUS_OENI, PEDIOCOCCUS_PENTOSACEUS, STREPTOCOCCUS_THERMOPHILUS.

The pre-fibril composition as formed by microbiological peptide formation, can be set to form fibrils upon acidification. This preferably is done to an extent comparable with the pH resulting from the aforementioned acidic hydrolysis. The rate of fibril formation may be increased by subjecting the mixture to shear or ultrasonic treatment. One of the advantages of this route is a shorter duration of the low pH heat treatment.

The fibrils formed according to the present invention preferably have an aspect ratio of greater than 5, i.e. defining the longest dimension of the fibril as its length, this length is at least 5 times larger than the diameter or width of the fibril. Preferably the length is of from 10 nm to 1 mm, and the diameter is of from 2 to 10 nm. More preferably the aspect ratio is greater than 50. The invention provides the advantageous possibility to tailor the aspect ratio by steering the peptide composition towards the presence of peptides that facilitate the formation of fibrils (which will generally lead to a higher aspect ratio) or the presence of peptides that inhibit fibril formation, such as the aforementioned β-sheet blockers, which will generally lead to a lower aspect ratio.

The pre-fibril composition made by the method of the invention is suitable for a variety of uses. This includes uses of the pre-fibril composition itself as an additive in food and non-food products, e.g. as a structuring agent, and particularly as a texturizing agent, i.e. for viscosity or gelation. It also includes the use of the pre-fibril composition to make fibrils which then can be used int. al. in the same manner as described in WO 2004/049819. In addition, the invention opens up the possibility to end up with fibrils as described before, but then formed *in situ* and/or at a chosen point in time. Thus, the peptide pre-fibril composition can int.al. be used to stabilize an emulsion or a foam. Upon adsorption at the appropriate interface (i.e. water/oil in an emulsion or water/air in a foam), the peptide pre-fibril composition is capable of fibrillary aggregation at these interfaces, which results in a robust boundary layer, and hence a highly stable emulsion or foam (as a result of a decreased disproportioning of the foam). Another use in which the peptide pre-fibril composition made by the method of the invention is used for its ability to form fibrils, is by adding the composition as an ingredient to an acidic liquid (e.g. fruit juice or yoghurt drink), to result in fibrillary aggregation (of varying extent, depending on conditions as will be apparent to the skilled person). This will result in a viscosity enhancement or gelation (the effect depending on concentration). The rate at which this occurs can be steered with reference to variable parameters such as pH and concentration, so as to obtain immediate or retarded fibrillary aggregation. Particularly if a retarded effect is desired, it will be advantageous to add the pre-fibril peptide composition in an encapsulated form. This can have the advantage of further retarding the effect from fibrillary aggregation.

Retarded fibril formation provides a particular advantage in production, as the product can be maintained as a low-viscous mass during processing steps, such as pumping, in which a low viscosity can be beneficial.

The pre-fibril peptide composition has a great advantage in that it does not itself have a substantial influence on the texture of foods and drinks. This enables making a solid or liquid food product that has a built-in effect of satisfying the stomach (satiation). Thus, when consumed by a person, the peptide composition will not disturb mouthfeel, as it will remain intact until it arrives in the gastric juice. Due to the pH thereof, and the benefit of elevated (body) temperature, fibrillary aggregation will occur almost instantaneously. Due to the gelation occurring *in situ* there, the person consuming the food product containing the pre-fibril composition of the invention, will experience satiety, i.e. the impression of a relatively larger meal than actually consumed. This can also have benefit for animal diet foods, e.g. for companion animals. In view of peptide taste, it will be preferred to employ the pre-fibril composition in taste-masked or encapsulated form, particularly if relatively small hydrophobic peptides are substantially present. In another preferred embodiment, in which pre-fibril composition are chosen that are enriched in respect of the aforementioned relatively large peptides, an advantage is a decreased need for taste-masking measures.

Techniques for taste-masking and/or for the encapsulation of peptides are known to the skilled person, and do not require elucidation here.

The invention also pertains to making fibrils of a proteinaceous material based on a β-lactoglobulin-containing whey protein preparation obtainable by a process as substantially described hereinbefore. I.e. the process of two steps, comprising first subjecting the protein to hydrolysis so as to form peptides, and then allowing fibril formation to occur at acidic pH. The resulting products, by tailoring the peptide composition, are distinguished from a process in which the β-lactoglobulin-containing whey protein preparation is subjected to a concerted process of hydrolysis and fibrillary aggregation.

The pre-fibril compositions made by the method of the invention, as well as the fibrils obtained in accordance with the invention, can be used in food products, particularly in acidic dairy products such as yoghurt or cheese. This use serves the aforementioned purposes, such as providing structuring properties.

Combinations of the various fibrils can be made. Further, combinations can be made with peptides obtainable from lysozyme, which are also fibril-forming.

The invention will be further illustrated hereinafter with reference to the following, non-limiting examples, that include a description of the Figures.

### Example 1

The pH of a 3% protein solution of bovine β-lactoglobulin, was set to 2 by adding a concentrated HCl solution and heated for 20 hours at 85°C in a shearing device at a constant shear rate of 323 s-1. During this heat treatment fibrillar aggregates were formed. The heated sample was diluted to a protein concentration of 0.8 g/l. Fibrils and non-aggregated protein material of the sample were separated using centrifugal filters (MWCO 100,000). The retentate contained fibrillar aggregates, as was shown by Thioflavin T fluorescence measurements, high-performance size-exclusion-chromatography under non-dissociating condition, and transmission electron microscopy. The filtrate did not contain fibrils.

The retentate was washed and centrifuged twice with a pH 2 HCl solution to remove non-aggregated proteinaceous material left in the retentate. The proportion of proteinaceous material present in the fibrils in the heated β-lactoglobulin solution was approximately 28 wt%.

Analysis of the retentate with high-performance size-exclusion-chromatography under fibril dissociating conditions showed that in the total heated sample, retentate and filtrate, no peak was visible at the position of unheated β-lactoglobulin, and all material eluted later than unheated β-lactoglobulin, indicating that the fibrils are not composed of intact β-lactoglobulin molecules, but peptides derived from the acid hydrolysis that takes place during heating at pH 2.

Molecular masses of the peptides present in the heated sample, retentate and filtrate were characterized using MALDI-TOF mass-spectrometry. The peptides had molecular masses between 2,000 and 8,000 Da, which means that the fibrils are composed of peptide fragments. The majority of the peptide fragments (both aggregated and non-aggregated) were a result of cleavage of the peptide bonds before or after aspartic acid. Four peptide fragments were present in the retentate and the total heated sample and not present in the filtrate, viz. [f1-32], [f1-33], [f1-52] and [f1-53]. The peptide fragment dominantly present in the fibrils was [f12-33], i.e., IQKVAGTWYSLAMAASDISLL. This peptide was also present in the filtrate.

### Example 2 (reference example not according to the invention)

A solution of 2 wt% β-lactoglobulin in 50 mM Tris-HCl and 2 mM zinc acetate, pH 8, was incubated at 37°C with AspN endoproteinase (P8104S, New England Biolabs), which cleaves peptide bonds N-terminal to aspartic acid residues. After hydrolysis ∼20% of intact β-lactoglobulin was present, while the rest of the protein was hydrolyzed into peptides of different sizes. The hydrolyzed protein solution was then acidified to pH 2. As a result, the viscosity increased.

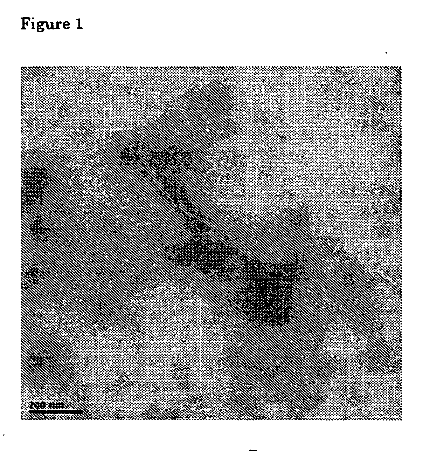

Figure 1 shows a transmission electron microscopy image of the β-lactoglobulin solution after enzymatic hydrolysis and incubation at pH 2. Fibrillar aggregates with a length of ∼1 µm can be observed in this picture, which shows that the enzymatic hydrolysis is an alternative route to obtain fibrillar aggregates of β-lactoglobulin.

### Example 3

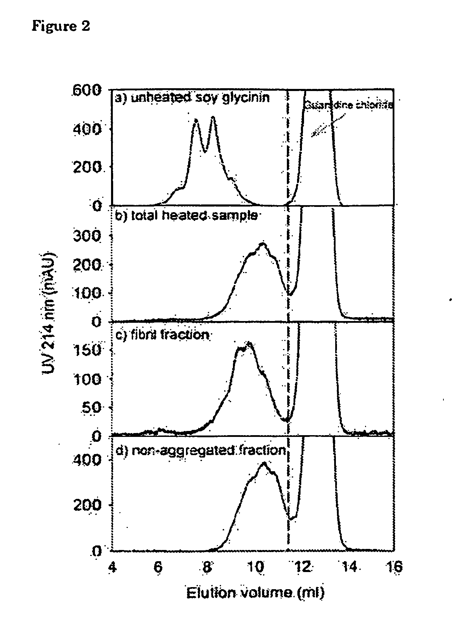

Fibrils of protein like β-lactoglobulin and soy glycinin can be prepared by heating the protein at pH 2. The peptides present after heating at pH 2 were a result of hydrolysis of the bonds between an aspartic acid residue and any other amino acid residue. Fibrils of soy glycinin are also predominantly composed of peptides. An isolate of soy glycinin was prepared from soy bean meal using isoelectric precipitation at pH 6.4. Fibrils of soy glycinin were prepared by heating (85 °C, 20 h) and shearing (shear rate of 323 s-1) a 2 wt% soy glycinin solution at pH 2. After this treatment, fibrils and non-aggregated proteins were separated from each other using centrifugal filter tubes (molecular weight cut off of 100 kDa). The non-separated fraction, the fibril fraction, the non-aggregated fraction and unheated soy glycinin were analyzed using HP-SEC (high performance size-exclusion-chromatography). Fibril dissociating conditions were used, which means that the samples were dissolved in a buffer containing 8 M guanidine chloride and 0.1M 1,4-dithiothreitol (pH 8). The HP-SEC elution profiles of the different samples is shown in Figure 2.

Figure 2 depicts HP-SEC (fibril dissociating conditions) elution profiles of (a) unheated soy glycinin, (b) total heated sample, (c) fibril fraction, and (d) non-aggregated protein material. Fibrils were dissociated using 8 M guanidine chloride and 0.1 M DTT (pH 8). The increase in UV signal of the elution profile after 11.5 ml (indicated by the dotted line) is due to the elution of guanidine chloride.

The heated material eluted later than the unheated soy glycinin solution, which shows that hydrolysis took place during the heat treatment at pH 2. Thus, peptides were present after the heat treatment. Most material present in the fibril fraction also eluted later than the unheated soyglycinin. This shows that soy glycinin fibrils are predominantly composed of peptides.

### Example 4

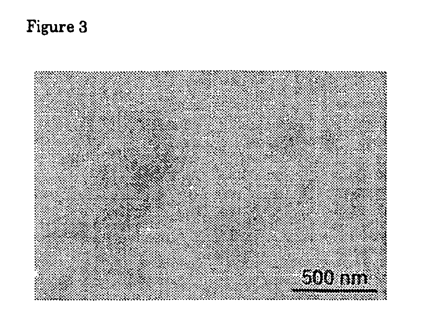

Fibrils were obtained from patatin by heating and stirring a 2 wt% protein solution for 24 h at 70 °C and pH 2. Figure 3 shows a TEM picture of the fibrils obtained from patatin. These fibrils were shorter (∼500 nm) and more flexible than fibrils formed from soy protein or β-lactoglobulin.

### Example 5

The conditions described for Example 1 were used with the exception that 8 M urea was added to the starting mixture.
The presence of urea in the mixture affects the formation of fibrils, but does not affect the hydrolysis of the of the bovine β-lactoglobulin. Urea counteract the formation of hydrogen bonds and hydrophobic interactions which interactions are believed to be the initial force for fibril formation.
After 20 hours the solution was cooled to room temperature, and the pH was increased from pH 2 to pH 7 by drop-wise addition of NaOH (aq). The urea was removed by chromatography (anion exchange). Thioflavin T fluorescence measurement and transmission electron microscopy was used to confirm the absence of fibrils.

## Claims

1. A method of making a peptide pre-fibril composition by the hydrolysis of a protein selected from the group consisting of β-lactoglobulin-containing whey protein preparation, glycinin-containing soy bean protein preparation, patatin, and mixtures thereof, comprising providing a solution of the protein in an aqueous acidic solvent, heating the solution under fibril-inhibiting conditions, and terminating the hydrolysis conditions by increasing the pH to neutral.

2. A method according to claim 1, wherein the hydrolysis under acidic conditions is conducted at a temperature higher than 20°C.

3. A method according to claim 1 or 2, wherein the hydrolysis is conducted at a pH of 0.5-4, preferably 0.5-3.

4. A method according to any one of the preceding claims, wherein the hydrolysis is conducted at a temperature of 80-120°C.

5. A method according to any one of the preceding claims, wherein the protein is β-lactoglobulin.

6. A method according to claim 5, wherein the dominant peptide in the proteinaceous material is peptide IQKVAGTWYSLAMAASDISLL.

7. A method of making a peptide pre-fibril composition obtainable by a method according to any one of the claims 1-6, comprising providing one or more micro-organisms capable of forming the appropriate peptides, preferably selected from the group consisting of BACILLUS_WEIHENSTEPHANENSIS, BIFIDOBACTERIUM_ADOLESCENTIS, BIFIDOBACTERIUM_LONGUM, BREVIBACTERIUM_LINENS, LACTOBACILLUS_ACIDOPHILUS, LACTOBACILLUS_BREVIS, LACTOBACILLUS_CASEI, LACTOBACILLUS_DELBRUECKII_SUBSP_BULGARICUS, LACTOBACILLUS_GASSERI, LACTOBACILLUS_JOHNSONII, LACTOBACILLUS_PLANTARUM, LACTOBACILLUS_REUTERI, LACTOBACILLUS_SAKEI, LACTOBACILLUS_SALIVARIUS, LACTOCOCCUS_LACTIS_CREMORIS, LACTOCOCCUS_LACTIS_LACTIS, LEUCONOSTOC_MESENTEROIDES, OENOCOCCUS_OENI, and PEDIOCOCCUS_PENTOSACEUS, STREPTOCOCCUS_THERMOPHILUS, allowing the micro-organisms to form these peptides, and harvesting the peptides.

8. A method of making a proteinaceous fibril composition, comprising making a peptide pre-fibril composition by a method according to any one of the preceding claims, and in a next step subjecting the pre-fibril composition to an acidic pH at elevated temperature for a sufficient duration to allow fibrillary aggregation to start.

## Patentansprüche

1. Verfahren zur Herstellung einer präfibrillären Peptid-Zusammensetzung durch Hydrolyse eines Proteins, ausgewählt aus der Gruppe, bestehend aus einer β-Lactoglobulin enthaltenden Hefeproteinzubereitung, einer Glycinin enthaltenden Sojabohnenproteinzubereitung, Patatin und Mischungen von diesen, umfassend das Bereitstellen einer Lösung des Proteins in einem wässrigen, sauren Lösungsmittel, Erwärmen der Lösung unter Fibrillen hemmenden Bedingungen und Beenden der Hydrolysebedingungen durch Erhöhen des pH auf neutral.

2. Verfahren nach Anspruch 1, wobei die Hydrolyse unter sauren Bedingungen bei einer Temperatur über 20°C durchgeführt wird.

3. Verfahren nach Anspruch 1 oder 2, wobei die Hydrolyse bei einem pH von 0,5-4, vorzugsweise 0,5-3 durchgeführt wird.

4. Verfahren nach einem der vorhergehenden Ansprüche, wobei die Hydrolyse bei einer Temperatur von 80-120°C durchgeführt wird.

5. Verfahren nach einem der vorhergehenden Ansprüche, wobei das Protein β-Lactoglobulin ist.

6. Verfahren nach Anspruch 5, wobei das dominante Peptid in dem proteinösen Stoff das Peptid IQKVAGTWYSLAMAASDISLL ist.

7. Verfahren zur Herstellung einer präfibrillären Peptid-Zusammensetzung, erhältlich durch ein Verfahren nach einem der Ansprüche 1-6, umfassend das Bereitstellen von einem oder mehreren Mikroorganismen, der bzw. die in der Lage ist/sind, die geeigneten Peptide zu bilden, vorzugsweise ausgewählt aus der Gruppe, bestehend aus BACILLUS_WEIHENSTEPHANENSIS, BIFIDOBACTERIUM_ADOLESCENTIS, BIFIDOBACTERIUM_LONGUM, BREVIBAKTERIUM_LINENS, LACTOBACILLUS_ACIDOPHILUS, LACTOBACILLUS_BREVIS, LACTOBACILLUS_CASEI, LACTOBACILLUS_DELBRUECKII_SUBSP_BULGARICUS, LΔCTOBACILLUS_GASSERI, LACTOBACILLUS_JOHNSONII, LACTOBACILLUS_PLANTARUM, LACTOBACILLUS_REUTERI, LACTOBACILLUS_SAKEI, LACTOBACILLUS_SALIVARIUS, LACTOCOCCUS_LACTIS_CREMORIS, LACTOCOCCUS_LACTIS_LACTIS, LEUCONOSTOC_MESENTEROIDES, OENOCOCCUS_OENI und PEDIOCOCCUS_PENTOSACEUS, STREPTOCOCCUS-THERMOPHILUS, die es den Mikroorganismen erlauben, diese Peptide zu bilden, und die das Ernten dieser Peptide ermöglichen.

8. Verfahren zur Herstellung einer proteinösen, fibrillären Zusammensetzung, umfassend die Herstellung einer präfibrillären Peptid-Zusammensetzung durch ein Verfahren nach einem der vorhergehenden Ansprüche und in einem nächsten Schritt das Aussetzen der präfibrillären Zusammensetzung an einen sauren pH bei erhöhter Temperatur über eine ausreichende Dauer, um das Starten der fibrillären Aggregation zu ermöglichen.

## Revendications

1. Procédé de fabrication d'une composition pré-fibrillaire peptidique par l'hydrolyse d'une protéine sélectionnée dans le groupe consistant en une préparation de protéine lactosérique contenant de la β-lactoglobuline, une préparation de protéine de soja contenant de la glycinine, la patatine, et des mélanges de celles-ci, qui comprend la mise à disposition d'une solution de la protéine dans un solvant acide aqueux, le chauffage de la solution dans des conditions inhibant les fibrilles, et l'arrêt des conditions d'hydrolyse en augmentant le pH jusqu'à la plage neutre.

2. Procédé selon la revendication 1, dans lequel l'hydrolyse dans des conditions acides est réalisée à une température supérieure à 20 °C.

3. Procédé selon la revendication 1 ou 2, dans lequel l'hydrolyse est réalisée à un pH de 0,5-4, de préférence 0,5-3.

4. Procédé selon l'une quelconque des revendications précédentes, dans lequel l'hydrolyse est réalisée à une température de 80 à 120 °C.

5. Procédé selon l'une quelconque des revendications précédentes, dans lequel la protéine est la β-lactoglobuline.

6. Procédé selon la revendication 5, dans lequel le peptide dominant dans le matériel protéique est le peptide IQKVAGTWYSLAMAASDISLL.

7. Procédé de fabrication d'une composition pré-fibrillaire peptidique pouvant être obtenue par un procédé selon l'une quelconque des revendications 1 à 6, qui comprend la mise à disposition d'un ou plusieurs micro-organismes capables de former les peptides appropriés, de préférence sélectionnés dans le groupe consistant en BACILLUS_WEIHENSTEPHANENSIS, BIFIDOBACTERIUM_ADOLESCENTIS, BIFIDOBACTERIUM_LONGUM, BIFIDOBACTERIUM_LONGUM, BREVIBACTERIUM_LINENS, LACTOBACILLUS_ACIDOPHILUS, LACTOBACILLUS_BREVIS, LACTOBACILLUS_CASEI, LACTOBACILLUS_DELBRUECKII_SUBSP_BULGARICUS, LACTOBACILLUS_GASSERI, LACTOBACILLUS_JOHNSONII, LACTOBACILLUS_PLANTARUM, LACTOBACILLUS_REUTERI, LACTOBACILLUS_SAKEI, LACTOBACILLUS_SALIVARIUS, LACTOCOCCUS_LACTIS_CREMORIS, LACTOCOCCUS_LACTIS_LACTIS, LEUCONOSTOC_MESENTEROIDES, OENOCOCCUS_OENI, et PEDIOCOCCUS_PENTOSACEUS, STREPTOCOCCUS_THERMOPHILUS, en permettant aux micro-organismes de former ces peptides, et la récolte des peptides.

8. Procédé de fabrication d'une composition fibrillaire protéique, qui comprend la fabrication d'une composition pré-fibrillaire peptidique par un procédé selon l'une quelconque des revendications précédentes et, au cours d'une étape suivante, la soumission de la composition pré-fibrillaire à un pH acide et à une température élevée pendant une durée suffisante pour permettre à l'agrégation fibrillaire de débuter.
